# EUROPÄISCHE PATENTSCHRIFT

(11) **EP 3 410 061 B1**
(45) Veröffentlichungstag und Bekanntmachung des Hinweises auf die Patenterteilung: **09.10.2019**
(21) Anmeldenummer: 18174962.3
(22) Anmeldetag: 29.05.2018
(51) Int. Cl.: G01B 17/00, G01S 15/06, G01S 7/52

(54) **VORRICHTUNG UND VERFAHREN ZUM ÜBERWACHEN DER POSITION EINES OBJEKTS MITTELS SCHALLWELLEN**
DEVICE AND METHOD FOR MONITORING THE POSITION OF AN OBJECT BY MEANS OF ACOUSTIC WAVES
DISPOSITIF ET MÉTHODE DE SURVEILLANCE DE LA POSITION D'UN OBJET AU MOYEN D'ONDES ACOUSTIQUES

(30) Priorität: 29.05.2017 CH 7002017
(43) Veröffentlichungstag der Anmeldung: 05.12.2018
(73) Patentinhaber: ELESTA GmbH, 7310 Bad Ragaz (CH)
(72) Erfinder: Steiner, Roman, 8725 Ernetschwil (CH)
(74) Vertreter: Riederer Hasler & Partner Patentanwälte AG

(56) Entgegenhaltungen:
- US-A1- 2008 047 350
- US-A1- 2013 070 556
- US-A1- 2013 263 511

## Beschreibung

Die Erfindung betrifft eine Vorrichtung zum Überwachen der Position eines Objekts mittels Schallwelllen gemäss Oberbegriff von Anspruch 1 und ein Verfahren gemäss Oberbegriff von Anspruch 10.

### Stand der Technik

In der Sicherheitsautomation werden Türpositionen oder andere bewegliche Teile, die berührungslos überwacht werden müssen, in vielen Fällen mit magnetischen oder funkstreckenübermittelnden Schaltern überwacht. Es kommen aber auch optische Systeme zum Einsatz.

Schallwellentechnik insbesondere die Ultraschallwellentechnik wird in einem sehr breiten Umfeld als bewährte Technik eingesetzt. Es gibt ein grosses Spektrum an Distanzmessungen, Ortungsgeräten, Geräte für medizinische Untersuchungen oder Anlagen, die Schweissnähte scannen.

Am nächsten kommt die Erfindung von der Anwendung her an das Scannen und Identifizieren von Fingerabdrücken oder an das Erkennen von Schweissnähten in der Metallindustrie.

### Aufgabe der Erfindung

Es ist deshalb ein Ziel der vorliegenden Erfindung, eine Vorrichtung zum Überwachen der örtlichen Lage oder Position eines Objekts mittels Schallwelllen vorzuschlagen, die auch in einer Umgebung mit starken elektormagnetischen Störungen oder auch staubigen und schmutzigen industriellen Umgebung zuverlässig arbeitet. Ein weiteres Ziel ist, eine Vorrichtung zur Verfügung zu stellen, die kostengünstig hergestellt werden kann.

### Beschreibung

Erfindungsgemäss werden die vorerwähnten Ziele durch die Merkmale der Ansprüche 1 und 10 realisiert. Vorteilhafte Weiterbildungen sind in den Unteransprüchen definiert.

Die Erfindung betrifft eine Vorrichtung zum Überwachen der Position eines Objekts sowie dessen Distanz von einem Schallwellensender mittels Schallwellen, mit einem im Abstand zum Objekt angeordneten Sensorteil mit
- wenigstens einem Schallwellensender,
- wenigstens einem Schallwellenempfänger, und
- einer Recheneinheit, die mit dem wenigstens einen Schallwellensender und dem wenigstens einen Schallwellenempfänger zwecks Steuerung derselben in Verbindung steht, und ausgelegt ist, um anhand des Echos einer vom Schallwellensender in Richtung des Objekts ausgesandten Schallwelle den Abstand zwischen dem Sensorteil und dem Objekt zu ermitteln.

Erfindungsgemäss zeichnet sich die Vorrichtung dadurch aus, dass ein vom Sensorteil separater, am Objekt anordenbarer Identifikationsreflektor mit einem dreidimensionalen Muster vorgesehen ist, und
- dass das Sensorteil eine Anordnung einer Mehrzahl von Schallwellenempfängern und Schallwellensendern aufweist,
wobei zur Identifikation des Identifikationsreflektors und Messung der Distanz zwischen dem Sensorteil und dem Identifikationsreflektor eine Mehrzahl von Echos zwischen unterschiedlichen Schallwellensender/Schallwellenempfängerkombinationen ausgewertet wird.

Die erfindungsgemässe Vorrichtung hat den grossen Vorteil, dass durch den Einsatz eines Identifikationsreflektors Fehlmessungen praktisch ausgeschlossen werden, weil Störeinflüsse ausgeschaltet werden. Der Identifikationsreflektor funktioniert wie ein individueller Schlüssel: Wird das Identifikationsmuster erkannt, dann ist das Messresultat gültig. Insbesondere sind bei einer Anzahl m Schallwellensender und einer Anzahl n Schallwellenempfänger m x n Kombinationen von Schallwellensender/Schallwellenempfänger-Paaren definiert, die m x n Messwerte liefern. Die Echos verschiedener Schallwellensender/Schallwellenempfänger-Paare werden nach dem Triggern der Schallwelle in Abhängigkeit der zurückgelegten Wegstrecke nach unterschiedlichen Zeitdauern durch die Schallwellenempfänger registriert. Aus diesen Informationen lässt sich das Muster des Identifikationsreflektors rechnerisch rekonstruieren und mit einem in der Rechnereinheit abgespeicherten Muster vergleichen. Liegen die registrierten Abweichungen unter einem bestimmten Schwellwert, dann befindet sich kein Objekt zwischen dem Identifikationsreflektor und der Überwachungsvorrichtung.

Eine Anordnung bestehend aus einer Mehrzahl von Schallwellenempfängern und Schallwellensendern kann im Rahmen der vorliegenden Erfindung aus einem Schallwellensender und einer Mehrzahl von Schallwellenempfänger oder aus einem Schallwellenempfänger und einer Mehrzahl von Schallwellensender bestehen. Vorzugsweise besteht die Anordnung jedoch aus einer Mehrzahl von Schallwellenempfängern und einer noch grösseren Zahl von Schallwellensendern, die ein Mehrfaches, insbesondere das Zwei- bis Zwanzigfache der Zahl der Schallwellenempfänger ist. Gemäss einer anderen Ausführungsform beträgt die Zahl der Schallwellensender und Schallwellenempfänger jedoch mindestens 50, vorzugsweise mehr als 100 und besonders bevorzugt mehr als 200, wobei das Verhältnis von Schallwellensendern zu Schallwellenempfängern zwischen 30 : 1 und 1 : 30, vorzugsweise zwischen 10 : 1 und 1 : 10 und besonders bevorzugt zwischen 5 : 1 und 1 : 5 liegt. Gemäß der Erfindung weist der Identifikationsreflektor ein dreidimensionales Muster oder Relief auf. Ein Identifikationsreflektor mit einem dreidimensionalen Muster lässt sich kostengünstig herstellen und erlaubt, Fehlmessungen auszuschliessen. Da die Identifikationsreflektoren vorzugsweise jeweils unterschiedliche dreidimensionale Muster aufweisen, ist die Herstellung mittels eines 3D-Druckers besonders bevorzugt.

Vorteilhaft ist die Recheneinheit ausgelegt ist, um zeitlich hintereinander unterschiedliche Kombinationen von Schallwellensender/Schallwellenempfänger-Paaren zu aktivieren und die dazugehörigen Echos auszuwerten. Da die Echos unterschiedlicher Schallwellensender/Schallwellenempfänger-Paare zu unterschiedlichen Zeitpunkten registriert werden, lässt sich das Muster des Identifikationsreflektors rekonstruieren.

Vorteilhaft umfasst das dreidimensionale Muster eine Mehrzahl von im Abstand voneinander angeordneten diskreten geometrischen Formen unterschiedlichen Querschnitts und/oder Höhe. Ein solches Muster kann mit grosser Zuverlässigkeit erkannt werden, wenn eine Anordnung (array) von Schallwellensendern und/oder Schallwellenempfängern in Kombination mit dem Identifikationsmuster eingesetzt wird.

Zweckmässigerweise sind die geometrischen Formen auf einem Support oder Boden angeordnet und umfassen vorzugsweise mindestens zwei, drei oder noch mehr quaderförmige Körper, die im Abstand voneinander angeordnet sind. Bevorzugt ist die Zahl der geometrischen Formen jedoch mindestens vier und vorzugsweise grösser als fünf.

Vorteilhaft sind der oder die Schallwellensender und der oder die Schallwellenempfänger in einer definierten Anordnung zueinander angeordnet. Zweckmässigerweise sind die Schallwellensender und Schallwellenempfänger in Gestalt einer Matrix angeordnet, in deren Mitte beispielsweise der Schallwellensender und um diesen herum die Schallwellenempfänger gruppiert sind. Denkbar ist jedoch auch die umgekehrte Anordnng, bei der der Schallwellenempfänger sich in der Mitte und die Schallwellensender drum herum befinden. Bevorzugt sind die Schallwellensender und Schallwellenempfänger auf einer gemeinsamen Platine angeordnet.

Vorzugsweise ist die Recheneinheit ausgelegt, um verschiedene Kombinationen von Sender/Empfängerpaaren zeitversetzt zu aktivieren.

Gemäss einer bevorzugten Ausführungsform ist die Anzahl der möglichen Schallwellensender/-Empfänger-Kombinationen jeweils grösser als 5, vorzugsweise grösser als 8 und besonders bevorzugt grösser als 12. Je grösser die Anzahl der Schallwellensender/-Empfänger-Kombinationen, desto grösser ist die Auflösung der Überwachungsvorrichtung.

Grundsätzlich können die Schallwellenempfänger und Schallwellensender im Wesentlichen in der gleichen Ebene oder in unterschiedlichen Ebenen angeordnet sein. Im letzteren Fall können die Schallwellenempfänger beispielsweise - in Richtung auf den Identifikationsreflektor gesehen - hinter den Schallwellensendern angeordnet sein. Vorteilhaft beträgt die Distanz zwischen Sensorteil und Objekt zwischen 0.5 mm und 100 m, vorzugsweise zwischen 1 mm und 50 m und besonders bevorzugt zwischen 10 mm und 10 m. Je nach Ausführngsart und -grösse der Überwachungsvorrichtung können also kleine bis grosse Distanzen überwacht werden.

Vorteilhaft ist der Identifikationsreflektor in einem schalldurchlässigen, wasserdichten Gehäuse eingebaut. Dies hat den Vorteil, dass er auch in industriellen Umgebungen eingesetzt werden kann.

Das zu überwachende Objekt ist insbesondere ein bewegliches Teil, wie z.B. eine Türe, eine Schutzabdeckung, ein beweglicher Sicherheitszaun, oder selbstfahrende/fremdgesteuerte Objekte.

Gemäss einer bevorzugten Ausführungsform ist die Recheneinheit ausgelegt, um die Schallwellensender zeitlich hintereinander zu aktivieren, um die reflektierte Schallwelle eindeutig einem bestimmten Sender zuordnen zu können. Die Vorrichtung wird also so betrieben, dass ein nachfolgender Sender erst aktiviert wird, wenn die vom Identifikationsreflektor reflektierte Schallwelle registriert ists. Es ist allerdings grundsätzlich vorstellbar, dass ein nachfolgender zweiter Sender bereits aktiviert wird, bevor die reflektierte Schallwelle des ersten Senders registriert ist. Allerdings muss dann aufgrund des minimal möglichen Abstands des Identifikationsreflektors sichergestellt sein, dass die registrierte Schallwelle noch vom vorhergehenden Sender stammt.

Gegenstand der vorliegenden Erfindung ist auch ein Verfahren zum Überwachen der Ausrichtung oder Position eines Objekts mittels Schallwellen, bei welchem Verfahren ein Schallwellensender Schallwellen aussendet und ein Schallwellenempfänger die vom Objekt zurückgeworfenen Schallwellen detektiert, um aus dem Echo beispielsweise auf das Vorhandensein oder Nichtvorhandenseins des Objekts zu schliessen und/oder die Distanz zwischen dem Sensorteil und dem Objekt zu messen.

Das erfindungsgemässe Verfahren zeichnet sich dadurch aus, dass am zu überwachenden Objekt ein Identifikationsreflektor angeordnet wird, und
- dass zur Identifikation des Identifikationsreflektors und Messung der Distanz zwischen dem Schallwellensender und dem Identifikationsreflektor eine Mehrzahl von Echos zwischen unterschiedlichen Sender/Empfängerpaaren ausgewertet werden. Dieses Verfahren hat den Vorteil, dass einerseits der Reflektor aus einer Vielzahl möglicher Kombinationen zusammengestellt werden kann und andererseits dadurch auch genau identifiziert werden kann, da der Identifikationsreflektor ein ganz bestimmtes Echomuster zurückwirft.

Ein weiterer Vorteil von diesem Verfahren ist, dass es im Gegensatz zu funkstreckenübermittelnden oder zu optischen Systemen auch in einer Umgebung mit starken elektromagnetischen Emissionen, die z.B. von Schweissrobotern verursacht werden oder bei Fremdlichteinflüssen problemlos funktioniert, da sie unbeeinflussbar von elektormagnetischen Strahlen und Fremdlicht ist. Durch das schalldurchlässige wasser- und staubdichte Gehäuse kann dieses Verfahren auch in einer staubigen und stark verschmutzten Industrie-Umgebung eingesetzt werden, da sie einerseits bis zu einem gewissen Verschmutzungsgrad funktioniert und andererseits die geschlossene Oberfläche auch gut gereinigt werden kann.

Gemäss einer bevorzugten Verfahrensvariante wird als Identifiktionsreflektor ein dreidimensionales Muster mit zwei oder mehreren diskreten geometrischen Formen verwendet. Dies hat den Vorteil, dass Interferenzen und Störgeräusche praktisch vollständig ausgeschaltet werden können.

Vorteilhaft werden die Schallwellensender und Schallwellenempfänger in einer definierten Anordnung zueinander angeordnet und das Echo unterschiedlicher Schallwellensender/Schallwellenempfängerkombinationen wird registriert. Dies hat den Vorteil, dass auf diese Weise der Identifikationsreflektor identifiziert werden kann. Denkbar ist, dass die Schallwellensender nach dem Piezo-Effekt arbeiten und sowohl Ultraschall senden als auch empfangen können. Dabei wird jeder Schallwellensender über einen regelbaren Phasenschieber angesteuert, der das Signal für den Einzelstrahler geringfügig verzögert. Durch Überlagerung des Schallbündels bildet sich ein Summensignal, das in seiner Abstrahlrichtung elektronisch geschwenkt werden kann. Durch eine zeilenweise Abtastung kann damit ein dreidimensionales Bild errechnet werden.

Vorteilhaft werden die Echo unterschiedlicher Schallwellensender/Schallwellenempfängerkombinationen zeitich hintereinander ausgewertet.

Zweckmässigerweise wird anhand des Echos der Mehrzahl unterschiedlicher Schallwellensender/Schallwellenempfänger-kombinationen das Muster des dreidimensionalen Identifikationsreflektors rekonstruiert. Danach kann das rekonstruierte Muster des Identifikationsreflektors mit einem oder mehreren abgespeicherten Referenzmustern verglichen werden. Dies hat den Vorteil, dass Störeinflüsse mit grosser Sicherheit ausgeschlossen werden können.

Vorzugsweise wird bei einer festgestellten Abweichung zwischen dem rekonstruierten Muster des Identifikationsreflektors und dem einen oder den mehreren abgespeicherten Referenzmustern ein Alarm ausgelöst oder ein Ausgang des Sensorteils geschalten.

Gemäss einer bevorzugten Verfahrensvariante kann zwecks Rauschunterdrückung die ausgesandten Schallwellen mit einem zusätzlichen Signal moduliert werden. Damit lässt sich die Störungsanfälligkeit weiter reduzieren.

Bei einem positiv erkannten Identifikationsreflektor können somit Prozesse validiert/ abgefertigt werden, wie z.B. das Erkennen einer leeren Materialstapel-Schublade, oder das sichere (normierte) Identifizieren einer bestimmten automatischen Materiallieferung in einem technischen Produktionsablauf.

Ausführungsbeispiele der Erfindung werden nun unter Bezugnahme auf die nachfolgenden Figuren näher im Detail beschrieben. Es zeigt:
- Figur 1:: Schematisch ein Ausführungsbeispiel der Erfindung mit einer Vorrichtung zum Überwachen der Position eines Objekts mit einem Sensorteil und einem Identifikationsreflektor;
- Figur 2:: Schematisch ein erstes Ausführungsbeispiel des Sensorteils von Fig. 1 mit einem Steuerteil und einer Anordnung von Schallwellenempfängern und einem einzelnen Schallwellensender;
- Figur 3:: Schematisch ein zweites Ausführungsbeispiel des Sensorteils von Fig. 1 mit einem Steuerteil und einer Anordnung von Schallwellensendern und einem einzelnen Schallwellenempfänger;
- Figur 4:: Schematisch ein drittes Ausführungsbeispiel einer kreisförmigen Anordnung von drei Schallwellenempfängern und 37 Schallwellensendern; Fig. 1 ohne Gehäuse;
- Figur 5:: Schematisch ein viertes Ausführungsbeispiel einer Anordnung von einem Schallwellenempfänger und 36 Schallwellensendern in einem Hexagon;
- Figur 6:: Schematisch ein fünftes Ausführungsbeispiel einer Anordnung einer je gleich grossen Zahl von Schallwellenempfängern und Schallwellensendern, wobei Schallwellensender und Schallwellenempfänger jeweils in einer Ebene und gestaffelt hintereinander angeordnet sind;
- Figur 7:: Schematisch ein Ausführungsbeispiel des Identifikationsreflektors von Fig. 1 ohne Gehäuse;
- Figur 8:: Der Identifikationsreflektor von Fig. 7 mit einem Gehäuse, das zwecks Veranschaulichung teilweise weggeschnitten ist;
- Figur 9:: Beispielhaft ein Ausführungsbeispiel der Erfindung mit einer zeilenförmigen Anordnung von vier Schallwellensendern und einem im Abstand zur Senderanordnung vorgesehenen einfachen Identifikationsreflektors zur Veranschaulichung der phased array Technik;
- Figur 10:: Die kürzesten Wegstrecken der Schallwellen aus dem Beispiel von Fig. 9;
- Figur 11:: Beispielhaft das erfindungsgemässe Auswerteverfahren anhand des von einem Identifikationsreflektor zurückgeworfenen Echos; und
- Figur 12:: Eine erfindungsgemässe Vorrichtung zur Überwachung einer Doppeltüre mit einem Senderteil und zwei Schallwellenempfänger.

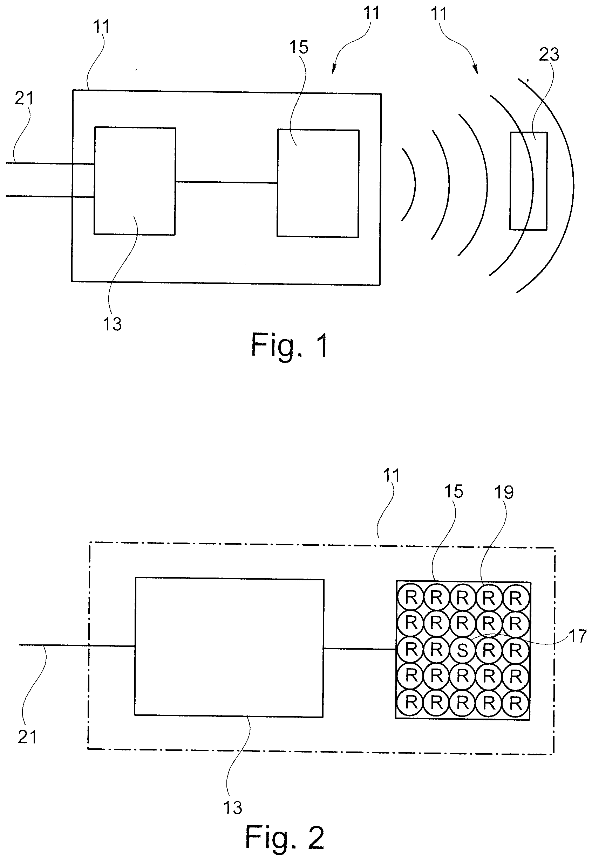

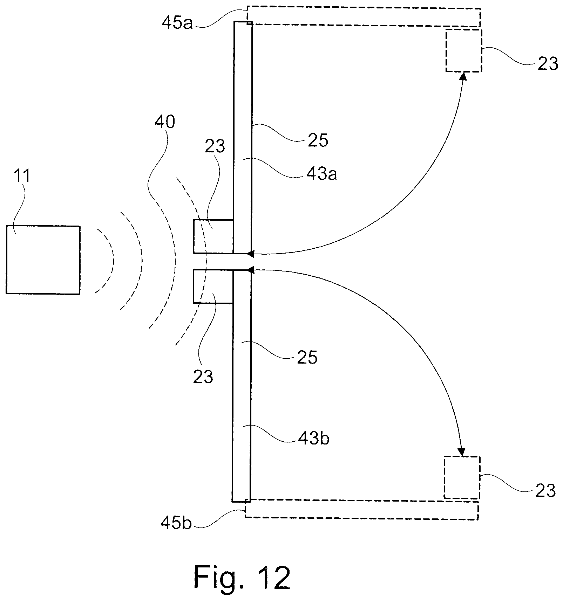

Die Figur 1 zeigt schematisch ein Ausführungsbeispiel einer erfindungsgemässen Vorrichtung 11 zum Überwachen der örtlichen Lage oder Position eines Objekts mittels Schallwelllen. Die Vorrichtung 11 umfasst eine Recheneinheit 13 und eine Anordnung 15 von Schallwellensendern 17 und Schallwellenempfängern 19. Die Recheneinheit 13 steht mit den einzelnen Schallwellensendern 17 und Schallwellenempfängern 19 in Verbindung und kann diese selektiv ansteuern und die von den Schallwellenempfängern 19 registrierten Signale auswerten. An der Recheneinheit 13 ist ein Ausgang 21 vorgesehen, über den ein Signal, z.B. ein Alarm, ausgegeben werden kann. Im Weiteren umfasst die erfindungsgemässe Vorrichtung 11 einen Identifikationsreflektor 23, der im Abstand vom Sensorteil 13 und vorzugsweise an einem zu überwachenden Objekt 25 (s. Fig. 12) angeordnet ist. Im Betrieb senden die Schallwellensender 17 Schallwellen 27 aus, die vom Identifikationsreflektor 23 teilweise zurückgeworfen und von den Schallwellenempfängern 19 registriert werden. Aus der Zeitdauer, die die Schallwellen 27 unterwegs sind, lässt sich der Abstand zwischen Sender 17 und Identifikationsreflektor 25 bei gegebenem Medium und entsprechender zeitlicher Auflösung genau berechnen. Ändert sich der Abstand zwischen dem Sensorteil 11 und dem Identifikationsreflektor 23 kann am Ausgang 21 ein Signal ausgegeben werden.

Wie in den Figuren 2 bis 6 beispielhaft gezeigt, kann sowohl das Verhältnis von Schallwellensendern zu Schallwellenempfänger als auch deren geometrische Anordnung zueinander unterschiedlich sein. Zu beachten ist allerdings, dass die Auflösung der erfindungsgemässen Vorrichtung umso grösser und genauer ist, je grösser die Anzahl der eingesetzten Schallwellensender und Schallwellenempfänger ist.

Das Ausführungsbeispiel gemäss Figur 2 ist dadurch gekennzeichnet, dass lediglich ein einzelner Schallwellensender 17 und eine Mehrzahl von Schallwellenempfängern 19 vorgesehen sind. Der Schallwellensender 17 und die Schallwellenempfänger 19 sind im gezeigten Ausführungsbeispiel matrixförmig angeordnet, wobei der einzige Sender 17 sich im Zentrum der 5 mal 5 Matrixanordnung befindet.

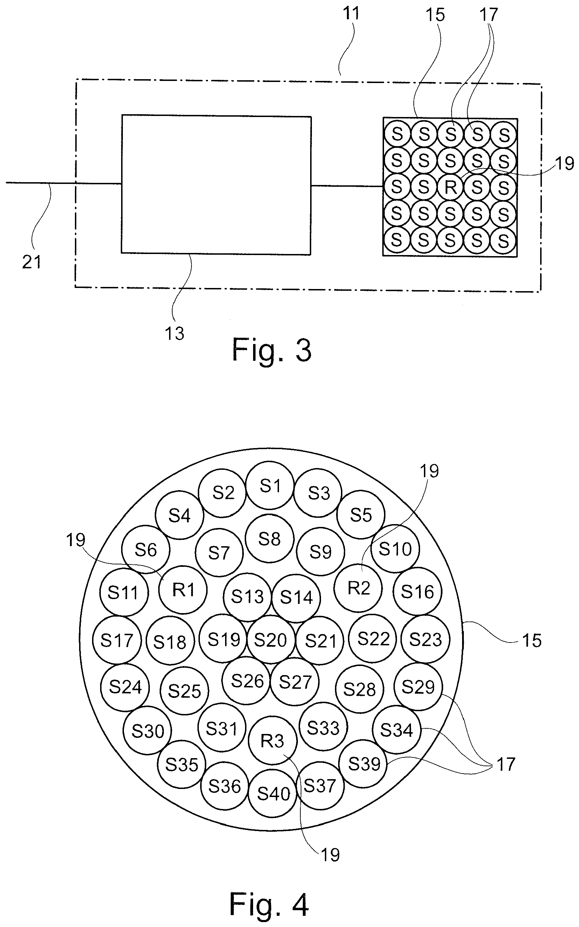

Das Ausführungsbeispiel gemäss Figur 3 unterscheidet sich von demjenigen von Fig. 2 dadurch, dass ein einzelner Schallwellenempfänger 19 und eine Mehrzahl von Schallwellensendern 17 vorgesehen sind. Dabei befindet sich der Empfänger 19 im Zentrum der Anordnung und die Schallwellensender 17 sind um den Empfänger 19 herum gruppiert.

Im Ausführungsbeispiel von Fig. 4 sind die Schallwellensender 17 und Schallwellenempfänger 19 in drei Kreisen um einen zentralen Schallwellensender S20 herum angeordnet. Drei Schallwellenempfänger R1 bis R3 auf dem mittleren Kreis bilden dabei die Eckpunkte eines imaginären, gleichseitigen Dreiecks. Eine Vielzahl von Schallwellensendern in einer kreisförmigen Anordnung.

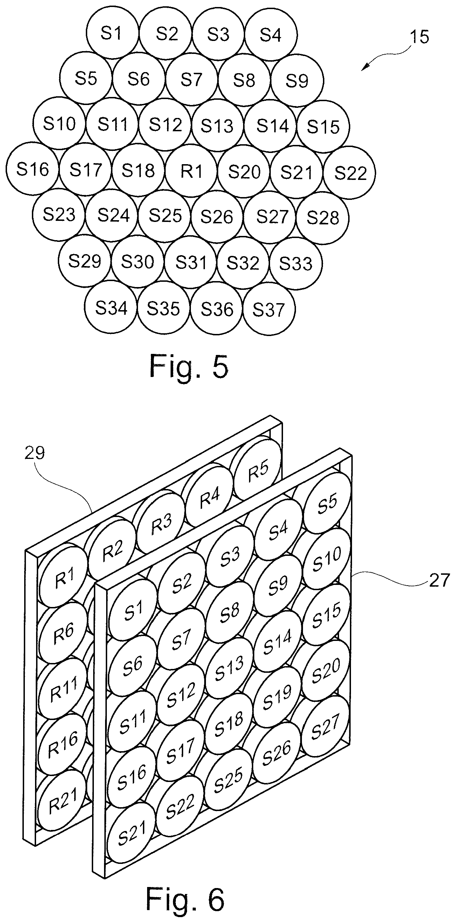

Beim Ausführungsbeispiel von Fig. 5 sind die Schallwellensender S1 bis S37 in einem Hexagon angeordnet, wobei im Zentrum des Hexagons sich der Schallwellenempfänger R1 befindet.

Im Ausführungsbeispiel von Fig. 6 ist die Zahl der eingesetzten Schallwellensender und die Zahl der eingesetzten Schallwellenempfänger jeweils gleich gross, wobei die Schallwellensender S1 bis S27 in einer ersten Lage 27 und die Schallwellenempfänger R1 bis R27 in einer zweiten Lage 29 hinter den Schallwellensendern angeordnet sind. Denkbar ist jedoch auch, dass Schallwellensender und Schallwellenempfänger alternierend in der gleichen Lage nebeneinander angeordnet sind.

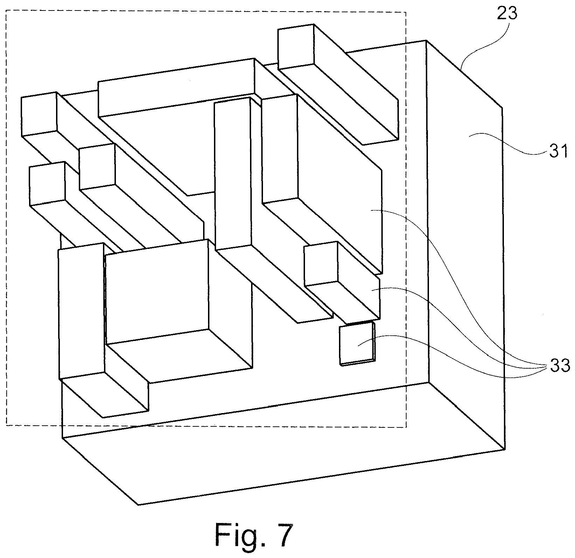

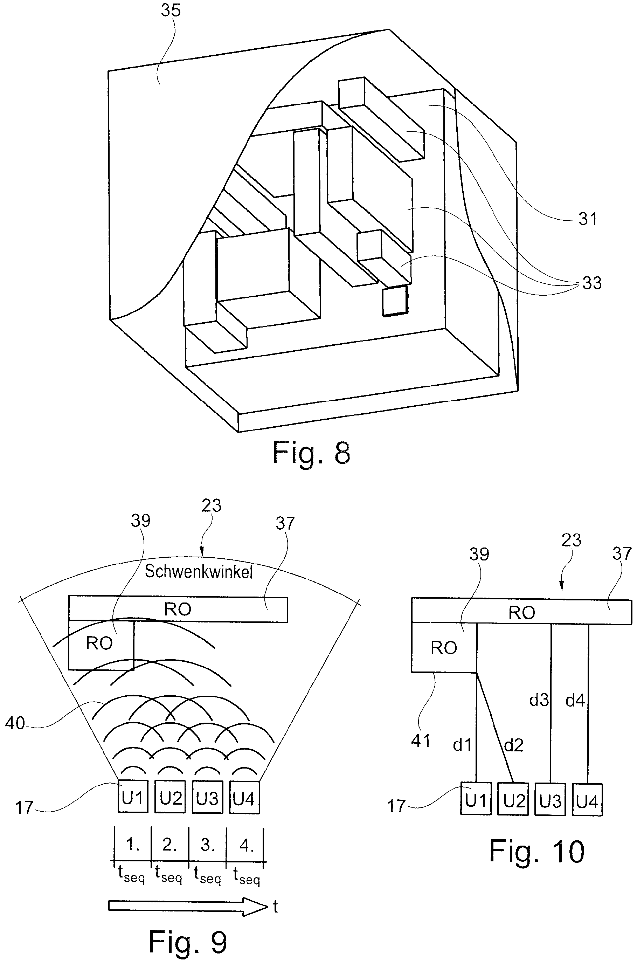

In Fig. 7 ist ein Identifikationsreflektor 23 näher im Detail dargestellt. Der Identifikationsreflektor 23 besitzt einen Support 31, auf dem eine Mehrzahl von geometrischen Körpern resp. Formen 33 in Abstand voneinander angeordnet sind. Mindestens einzelne geometrischen Formen 33 unterscheiden sich in der Höhe und vorzugsweise im Querschnitt voneinander. Gemäss dem gezeigten, bevorzugten Ausführungsbeispiel sind die geometrischen Formen durch Quader gebildet, die auf dem Support 31 angeordnet sind. Der Identifikationsreflektor 23 kann ein Gehäuse 35 umfassen, das für Schallwellen mindestens teilweise durchlässig ist (Fig. 8). Dies erlaubt es, die erfindungsgemässe Vorrichtung auch in schmutziger Umgebung oder Anlagen, die nass gereinigt werden müssen, einzusetzen.

Fig. 9 zeigt zwecks Veranschaulichung des Messprinzips eine Anordnung von vier Schallwellensendern U1 bis U4 und einem Identifikationsreflektor 23, der im Abstand von den Schallwellensendern angeordnet ist. Der Identifikationsreflektor 23 besteht aus einem flachen Reflektorteil 37 und einem auf der linken Seite des Reflektorteils angeordneten Quader 39, der das Reflektorteil 37 in Richtung zu den Schallwellensendern U1 bis U4 überragt. Die Schallwellensender U1 bis U4 werden zeitlich nacheinander nach einer Zeitdauer t_{seq} aktiviert und senden dabei Schallwellen 40 aus. Wie aus der Fig. 10 ersichtlich ist, ist d₁ die kürzeste Distanz zwischen dem Sender U₁ und der vorderen Stirnfläche 41 des Quaders, d₂ die kürzeste Distanz zwischen dem Sender U₂ und vorderen Stirnfläche 41 des Quaders, und d₃ resp. d₄ die jeweils kürzesten Distanzen zwischen den Sendern U₃ und U₄ und dem Reflektorteil 37.

Der Fachmann erkennt, dass bei einer ensprechend grossen Zahl von zeitlich nacheinander ausgeführten Echomessungen zwischen verschiedenen Paaren von Schallwellensendern und Schallwellenempfängern sich die räumliche Struktur des Identifikationsreflektors auflösen lässt, sodass eine eindeutige Zuordnung zu einem bestimmten Reflektorteil gemacht werden kann. Denkbar ist zudem, dass die Schallwellen zwecks Abgrenzung zu anderen ev. störenden Geräuschen zusätzlich moduliert werden.

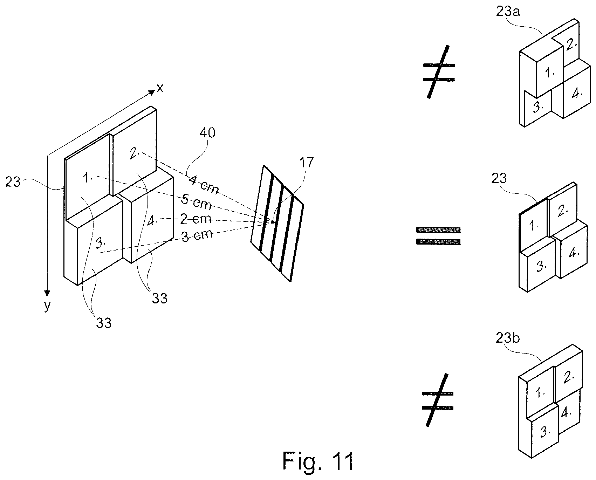

In der Figur 11 ist anhand eines einfachen Beispiels gezeigt, wie sich die Wegstrecken der von einem einzelnen Sender ausgesandten Schallwellen unterscheiden, je nach dem, von welcher Form 33 des Reflektorteils die Schallwelle 27 zurückgeworfen wird. So beträgt der Abstand des Schallwellensenders 17 von der Form mit der Nummer 1 mit der Koordinatenposition (X1,Y1) 5 cm, von der Form mit der Nummer 2 mit der Koordinatenposition (X2,Y1) 4 cm, von der Form mit der Nummer 3 mit der Koordinatenposition (X1,Y2) 3 cm und von der Form mit der Nummer 4 mit der Koordinatenposition (X2,Y2) 2 cm. In der nachfolgenden Tabelle 1 sind die verschiedenen Distanzen zwischen dem Schallwellensender 17 und dem Identifikationsreflektor 23 zusammengefasst:

| Array | X-Position 1 | X-Position 2 |
|---|---|---|
| Y-Position 1 | 5 cm | 4 cm |
| Y-Position 2 | 3 cm | 2 cm |

Demgegenüber wären die Distanzen zwischen einem Identifikationsreflektor 23a, wie er oben rechts gezeigt ist, wie folgt:

| Array | X-Position 1 | X-Position 2 |
|---|---|---|
| Y-Position 1 | 3 cm | 5 cm |
| Y-Position 2 | 5 cm | 3 cm |

Die entsprechenden Distanzen zwischen einem Identifikationsreflektor 23b, wie er unten rechts gezeigt ist, wären wie folgt:

| Array | X-Position 1 | X-Position 2 |
|---|---|---|
| Y-Position 1 | 4 cm | 3 cm |
| Y-Position 2 | 2 cm | 5 cm |

Da die gemessenen Wegstrecken folglich lediglich mit dem auf der rechten Seite abgebildeten, mittleren Identifikationsreflektor 23 übereinstimmen, dessen Muster im Speicher der Recheneinheit abgelegt ist, ist der Identifikationsreflektor 23 eindeutig identifizierbar.

Figur 12 zeigt, wie die erfindungsgemässe Vorrichtung zur Überwachung eines Objekts 25, vorliegend einer Doppeltüre bestehend aus zwei um Schwenkachsen 45a, 45b verschwenkbaren Türflügeln 43a, 43b, eingesetzt werden kann. Dabei bildet ein Sensorteil 11 zusammen mit zwei Schallwellenempfängern 23 eine Überwachungsvorrichtung für die beiden Flügel 43a, 43b der Doppeltüre. Die Offenposition der Türflügel ist in der Fig. 12 strichliert eingezeichnet.

Das erfindungsgemässe Verfahren lässt sich mit jeder der in den Figuren 2 bis 6 beschriebenen Anordnungen von Schallwellensendern und Schallwellenempfängern anwenden. Von Bedeutung ist lediglich, dass die Anzahl der Schallwellensender und der Schallwellenempfänger und deren Abstände voneinander in Kombination mit einem bestimmten Identifikationsreflektor und dem Abstand zwischen Sensorteil und Identifkationsreflektor ausreichend ist, um die nötige Auflösung zur eindeutigen Identifizierung des Identifikationsreflektors zu erreichen.

Zusammenfassung: Es wird anhand des Echos einer Mehrzahl von unterschiedlichen Schallwellensender/Schallwellenempfänger-Kombinationen das Muster des dreidimensionalen Identifikationsreflektor rekonstruiert.

### Legende

- 11: Vorrichtung
- 13: Sensorteil
- 15: Anordnung von Schallwellensendern/Schallwellenempfängern
- 17: Schallwellensender
- 19: Schallwellenempfänger
- 21: Ausgang
- 23: Identifikationsreflektor
- 25: Zu überwachendes Objekt
- 27: Erste Lage
- 29: Zweite Lage
- 31: Support
- 33: Formen
- 35: Gehäuse des Identifikationsreflektors
- 37: flaches Reflektorteil
- 39: Quader
- 40: Schallwellen
- 41: vordere Stirnfläche des Quaders 39
- 43a, 43b: Türflügeln
- 45a, 45b: Schwenkachsen

## Patentansprüche

1. Vorrichtung zum Überwachen der Position eines Objekts sowie dessen Abstand von einem Schallwellensender mittels Schallwellen mit einem Sensorteil mit
- wenigstens einem Schallwellensender,
- wenigstens einem Schallwellenempfänger, und
- einer Recheneinheit, die mit dem wenigstens einen Schallwellensender und dem wenigstens einen Schallwellenempfänger zwecks Steuerung derselben in Verbindung steht, und ausgelegt ist, um anhand des Echos einer vom Schallwellensender in Richtung des Objekts ausgesandten Schallwelle mindestens den Abstand zwischen dem Sensorteil und dem Objekt zu ermitteln,
**dadurch gekennzeichnet,**
- **dass** ein vom Sensorteil separater, am Objekt anordenbarer Identifikationsreflektor mit einem dreidimensionalen Muster vorgesehen ist,
und
- **dass** das Sensorteil eine Anordnung einer Mehrzahl von Schallwellenempfängern und Schallwellensendern aufweist,
wobei die Recheneinheit ausgelegt ist, zur Identifikation des Identifikationsreflektors und Messung der Distanz zwischen dem Sensorteil und dem Identifikationsreflektor eine Mehrzahl von Echos zwischen unterschiedlichen Sender/Empfängerkombinationen auszuwerten.

2. Vorrichtung nach Anspruch 1, **dadurch gekennzeichnet, dass** die Recheneinheit ausgelegt ist, um zeitlich hintereinander unterschiedliche Kombinationen von Schallwellensender/Schallwellenempfänger-Paaren zu aktivieren und die dazugehörigen Echos auszuwerten.

3. Vorrichtung nach Anspruch 1 oder 2, **dadurch gekennzeichnet, dass** das dreidimensionale Muster eine Mehrzahl von im Abstand voneinander angeordneten diskreten geometrischen Formen unterschiedlichen Querschnitts und/oder Höhe umfasst, wobei die geometrischen Formen vorzugsweise auf einem Support angeordnet sind und vorzugsweise zwei, drei oder mehr Körper umfassen.

4. Vorrichtung nach einem der Ansprüche 1 bis 3, **dadurch gekennzeichnet, dass** der oder die Schallwellensender und der oder die Schallwellenempfänger in einer definierten Anordnung zueinander, z.B. auf einer Platine, angeordnet sind.

5. Vorrichtung nach einem der Ansprüche 1 bis 4, **dadurch gekennzeichnet, dass** die Recheneinheit ausgelegt ist, um verschiedene Kombinationen von Sender/Empfängerpaaren zeitversetzt zu aktivieren.

6. Vorrichtung nach einem der Ansprüche 1 bis 5, **dadurch gekennzeichnet, dass** die Anzahl der möglichen Schallwellensender/--Empfänger-Kombinationen jeweils grösser als 5, vorzugsweise grösser als 10 und besonders bevorzugt grösser als 20 ist.

7. Vorrichtung nach einem der Ansprüche 1 bis 6, **dadurch gekennzeichnet, dass** die Schallwellenempfänger und Schallwellensender im Wesentlichen in der gleichen Ebene oder in unterschiedlichen Ebenen angeordnet sind.

8. Vorrichtung nach einem der Ansprüche 1 bis 7, **dadurch gekennzeichnet, dass** die Distanz zwischen Sensorteil und Objekt zwischen 0.5 mm und 100 m, vorzugsweise zwischen 1 mm und 50 m und besonders bevorzugt zwischen 10 mm und 10 m beträgt.

9. Vorrichtung nach einem der Ansprüche 1 bis 8, **dadurch gekennzeichnet, dass** der Identifikationsreflektor in einem schalldurchlässigen, wasserdichten Gehäuse eingebaut ist.

10. Verfahren zum Überwachen der örtlichen Position eines Objekts mittels Schallwellen, bei welchem Verfahren ein Schallwellensender Schallwellen aussendet und ein Schallwellenempfänger die vom Objekt zurückgeworfenen Schallwellen detektiert, um aus dem Echo mindestens die Distanz zwischen dem Sensorteil und dem Objekt zu messen,
**dadurch gekennzeichnet,**
- **dass** am zu überwachenden Objekt ein Identifikationsreflektor angeordnet wird, und
- **dass** zur Identifikation des Identifikationsreflektors und Messung der Distanz zwischen dem Schallwellensender und dem Identifikationsreflektor eine Mehrzahl von Echos zwischen unterschiedlichen Sender/Empfängerpaaren ausgewertet werden.

11. Verfahren nach Anspruch 10, **dadurch gekennzeichnet, dass** die Echo unterschiedlicher Schallwellensender/Schallwellen-empfängerkombinationen zeitich hintereinander ausgewertet werden.

12. Verfahren nach Anspruch 10 oder 11, **dadurch gekennzeichnet, dass** anhand des Echos der Mehrzahl unterschiedlicher Schallwellensender/Schallwellenempfänger-kombinationen das Muster des dreidimensionalen Identifikationsreflektors rekonstruiert wird und vorzugsweise das rekonstruierte Muster des Identifikationsreflektors mit einem oder mehreren abgespeicherten Referenzmustern verglichen wird.

13. Verfahren nach einem der Ansprüche 10 bis 12, **dadurch gekennzeichnet, dass** bei einer festgestellten Abweichung zwischen dem rekonstruierten Muster des Identifikationsreflektors und dem einen oder den mehreren abgespeicherten Referenzmustern ein Alarm ausgelöst oder ein Ausgang des Sensorteils geschalten wird.

14. Verfahren nach einem der Ansprüche 10 bis 13, **dadurch gekennzeichnet, dass** zwecks Rauschunterdrückung die ausgesandten Schallwellen mit einem zusätzlichen Signal moduliert werden.

15. Verwendung der Vorrichtung gemäss einem der Ansprüche 1 bis 9 zum Erkennen von Objekten oder Personen in einem «Schutzfeld» zwischen Identifikationsreflektor und Sensor, z.B. als Türkontaktschalter einer Schutztüre zum Absichern einer automatisiert arbeitenden technischen Anlage.

## Claims

1. A device for monitoring the position of an object as well as its distance from a sound wave emitter, by means of sound waves, having a sensor part with
- at least one sound wave emitter,
- at least one sound wave receiver, and
- a computing unit, which is connected with the at least one sound wave emitter and the at least one sound wave receiver, for controlling the same, and which is adapted for determining, based on the echo of a sound wave emitted by the sound wave emitter in the direction of the object, the distance between the sensor part and the object,
**characterized in that**
- an identification reflector, which is separate from the sensor part and may be positioned on the object, is provided with a three-dimensional pattern, and
- the sensor part has an array of a plurality of sound wave receivers and sound wave emitters, wherein in order to identify the identification reflector and to measure the distance between the sensor part and the identification reflector, a plurality of echoes between different sound wave emitter/sound wave receiver combinations is evaluated.

2. The device of claim 1, **characterized in that** the computing unit is adapted for activating, in a time sequence, different combinations of sound wave emitter/sound wave receiver-pairs and evaluate the corresponding echoes.

3. The device of claim 1 or 2, **characterized in that** the three-dimensional pattern comprises a plurality of discrete geometric forms spaced from each other, which have different cross-sections and/or heights, wherein the geometric forms are preferably arranged on a support and the geometric forms comprise preferably two, three, or more bodies.

4. The device of any of claims 1 to 3, **characterized in that** the one or more sound wave emitters and the one or more sound wave receivers are positioned relative to each other according to a defined arrangement, preferably on a circuit board.

5. The device of any of claims 1 to 4, **characterized in that** the computing unit is adapted for activating, in a temporally offset way, different combinations of emitter/receiver pairs.

6. The device of any of claims 1 to 5, **characterized in that** the number of possible sound wave emitter/sound wave receiver combinations is respectively larger than 5, preferably larger than 10, and particularly preferably larger than 20.

7. The device of any of claims 1 to 6, **characterized in that** the sound wave receivers and the sound wave emitters are substantially arranged in the same plane or in different planes.

8. The device of any of claims 1 to 7, **characterized in that** the distance between the sensor part and the object is between 0,5 mm and 100 m, preferably between 1 mm and 50 m and particularly preferably between 10 mm and 10 m.

9. The device of any of claims 1 to 8, **characterized in that** the identification reflector is mounted inside a sound-permeable, waterproof enclosure.

10. A method for monitoring the location of an object by means of sound waves, in which method a sound wave emitter emits sound waves and a sound wave receiver detects the sound waves reflected by the object, in order to measure at least the distance between the sensor part and the object based on the echo,
**characterized in that**
- an identification reflector is positioned on the object to be monitored, and
- for identifying the identification reflector and for measuring the distance between the sound wave emitter and the identification reflector, a plurality of echoes between different emitter/receiver-pairs is evaluated.

11. The method of any of claims 10, **characterized in that** the echoes of different sound wave emitter/sound wave receiver combinations are evaluated in a time sequence.

12. The method of claim 10 or 11, **characterized in that**, based on the echo of the plurality of different sound wave emitter/sound wave receiver combinations, the pattern of the three-dimensional identification reflector is reconstructed, and the reconstructed pattern of the identification reflector is preferably compared to one or more stored reference patterns.

13. The method of any of claims 10 to 12, **characterized in that** if a difference between the reconstructed pattern of the identification reflector and the one or more stored reference patterns is detected, an alarm is activated, or an output of the sensor part is switched.

14. The method of any of claims 10 to 13, **characterized in that** in order to perform a noise suppression, the emitted sound waves are modulated with an additional signal.

15. Use of the device of any of claims 1 to 9, for detecting objects or persons within a "protection area" between the identification reflector and the sensor, e.g. as a door contact switch of a safety door for protecting an automatically operating technical installation.

## Revendications

1. Dispositif pour surveiller la position d'un objet ainsi que sa distance d'un émetteur d'ondes sonores au moyen d'ondes sonores avec une partie capteur avec
- au moins un émetteur d'ondes sonores,
- au moins un récepteur d'ondes sonores et
- une unité de calcul qui est en relation avec le au moins un émetteur d'ondes sonores et le au moins un récepteur d'ondes sonores pour la commande de ceux-ci et qui est conçue pour déterminer au moins la distance entre la partie capteur et l'objet à l'aide de l'écho d'une onde sonore émise par l'émetteur d'ondes sonores en direction de l'objet,
**caractérisé en ce**
- **qu'**un réflecteur d'identification séparé de la partie capteur, qui peut être placé sur l'objet, est prévu avec un motif tridimensionnel et
- **que** la partie capteur présente un arrangement d'une multitude de récepteurs d'ondes sonores et d'émetteurs d'ondes sonores, cependant que l'unité de calcul est conçue pour analyser une multitude d'échos entre différentes combinaisons d'émetteurs et de récepteurs pour l'identification du réflecteur d'identification et la mesure de la distance entre la partie capteur et le réflecteur d'identification.

2. Dispositif selon la revendication 1, **caractérisé en ce que** l'unité de calcul est conçue pour activer différentes combinaisons de paires d'émetteurs d'ondes sonores et de récepteurs d'ondes sonores successivement dans le temps et pour analyser les échos correspondants.

3. Dispositif selon la revendication 1 ou 2, **caractérisé en ce que** le motif tridimensionnel comprend une multitude de formes géométriques discrètes de section et/ou de hauteur différente, placées espacées l'une de l'autre, cependant que les formes géométriques sont placées de préférence sur un support et comprennent de préférence deux, trois corps ou plus.

4. Dispositif selon l'une des revendications 1 à 3, **caractérisé en ce que** le ou les émetteurs d'ondes sonores et le ou les récepteurs d'ondes sonores sont placés dans un arrangement défini l'un par rapport à l'autre, par exemple sur une platine.

5. Dispositif selon l'une des revendications 1 à 4, **caractérisé en ce que** l'unité de calcul est conçue pour activer en différé différentes combinaisons de paires d'émetteurs et de récepteurs.

6. Dispositif selon l'une des revendications 1 à 5, **caractérisé en ce que** le nombre des combinaisons possibles d'émetteurs et de récepteurs d'ondes sonores est respectivement supérieur à 5, de préférence supérieur à 10 et de manière particulièrement préférée supérieur à 20.

7. Dispositif selon l'une des revendications 1 à 6, **caractérisé en ce que** les récepteurs d'ondes sonores et les émetteurs d'ondes sonores sont placés substantiellement dans le même pian ou dans des plans différents.

8. Dispositif selon l'une des revendications 1 à 7, **caractérisé en ce que** la distance entre la partie capteur et l'objet est entre 0,5 mm et 100 m, de préférence entre 1 mm et 50 m et de manière particulièrement préférée entre 10 mm et 10 m.

9. Dispositif selon l'une des revendications 1 à 8, **caractérisé en ce que** le réflecteur d'identification est monté dans un boîtier perméable au son, étanche à l'eau.

10. Procédé pour surveiller la position locale d'un objet au moyen d'ondes sonores, procédé pour lequel un émetteur d'ondes sonores émet des ondes sonores et un récepteur d'ondes sonores détecte les ondes sonores réfléchies par l'objet pour mesurer au moins la distance entre la partie capteur et l'objet à partir de l'écho,
**caractérisé en ce**
- **qu'**un réflecteur d'identification est placé sur l'objet à surveiller et
- **qu'**une multitude d'échos entre différentes paires d'émetteurs/de récepteurs est analysée pour l'identification du réflecteur d'identification et pour la mesure de la distance entre l'émetteur d'ondes sonores et le réflecteur d'identification.

11. Procédé selon la revendication 10, **caractérisé en ce que** les échos de différentes combinaisons de paires d'émetteurs et de récepteurs sont analysés successivement dans le temps.

12. Procédé selon la revendication 10 ou 11, **caractérisé en ce que** le motif du réflecteur d'identification tridimensionnel est reconstruit à l'aide de l'écho de la multitude de différentes combinaisons de paires d'émetteurs et de récepteurs et que de préférence le motif reconstruit du réflecteur d'identification est comparé à un ou plusieurs motifs de référence mémorisés.

13. Procédé selon l'une des revendications 10 à 12, **caractérisé en ce qu'**une alarme est déclenchée ou une sortie de la partie capteur est commutée lorsqu'un écart est constaté entre le motif reconstruit du réflecteur d'identification et l'un ou plusieurs motifs de référence mémorisés.

14. Procédé selon l'une des revendications 10 à 13, **caractérisé en ce que** les ondes sonores émises sont modulées avec un signal supplémentaire pour la suppression du bruit.

15. Utilisation du dispositif selon l'une des revendications 1 à 9 pour la reconnaissance d'objets ou de personnes dans un champ de protection entre le réflecteur d'identification et le capteur, par exemple en tant que contacteur de porte d'une porte de protection pour sécuriser une installation technique qui fonctionne de manière automatisée.
